# EUROPÄISCHE PATENTSCHRIFT

(11) **EP 2 709 867 B1**
(45) Veröffentlichungstag und Bekanntmachung des Hinweises auf die Patenterteilung: **30.03.2016**
(21) Anmeldenummer: 12723439.1
(22) Anmeldetag: 18.05.2012
(51) Int. Cl.: B60J 7/02

(54) **GLEITEREINHEIT ZUR LAGERUNG EINES BEWEGLICHEN DACHELEMENTS EINES FAHRZEUGDACHS UND FAHRZEUGDACH**
SLIDER UNIT FOR THE MOUNTING OF A MOVABLE ROOF ELEMENT OF A VEHICLE ROOF, AND VEHICLE ROOF
ENSEMBLE DE GLISSEMENT SERVANT AU MONTAGE D'UN ÉLÉMENT DE TOIT MOBILE D'UN TOIT DE VÉHICULE, ET TOIT DE VÉHICULE

(30) Priorität: 20.05.2011 DE 102011102718
(43) Veröffentlichungstag der Anmeldung: 26.03.2014
(73) Patentinhaber: Webasto SE, 82131 Stockdorf (DE)
(72) Erfinder: HIRVONEN, Mattias, 80639 München (DE)
(74) Vertreter: Epping - Hermann - Fischer
(86) Internationale Anmeldenummer: PCT/EP2012/059281
(87) Internationale Veröffentlichungsnummer: WO 2012/159995

(56) Entgegenhaltungen:
- EP-A1- 1 637 376
- DE-A1-102004 057 810
- FR-A1- 2 466 364

## Beschreibung

Die Erfindung betrifft eine Gleitereinheit zur Lagerung eines beweglichen Dachelements eines Fahrzeugdachs nach dem Oberbegriff des Anspruchs 1 und ein Fahrzeugdach.

Mit einer derartigen Gleitereinheit können verschiedene bewegliche Dachelemente wie Schiebedachdeckel mit oder ohne Glaselement, oder Rollos, insbesondere Sonnenschutzrollos gegenüber einem fahrzeugfesten Abschnitt des Fahrzeugdachs vorzugsweise in Fahrzeuglängsrichtung verschoben werden.

Die US 2004/0068839 A1 offenbart eine Führungsanordnung für ein Schiebedach eines Fahrzeugs. Die Führungsanordnung umfasst eine Führungsschiene und einen Gleitschlitten, der in der Führungsschiene verschiebbar ist. Eine Feder wirkt mit dem Gleitschlitten so zusammen, dass ein Bremselement des Gleitschlittens gegen eine Bremsfläche der Führungsschiene gedrückt wird.

Die FR 2 906 188 A1 offenbart eine Abdeckvorrichtung für ein Kraftfahrzeug, mit einem Abdeckelement, das zwischen einer eingefahrenen und einer ausgezogenen Stellung verschiebbar ist. Ein Zugspriegel weist an jedem seiner Enden einen Schuh auf, der jeweils in einer Führungsschiene angeordnet ist.

Die US 804,308 offenbart eine Aufnahmevorrichtung für ein Rollo, das in Verbindung mit einem Fensterrahmen ist. Die Aufnahmevorrichtung weist Rollen und Reibungselemente auf, die mit dem Fensterrahmen in Kontakt bringbar sind.

Die FR 2 466 364 A1 offenbart den Oberbegriff des Anspruchs 1.

Der Erfindung liegt die Aufgabe zugrunde, eine Gleitereinheit zur Lagerung eines beweglichen Dachelements eines Fahrzeugdachs und ein Fahrzeugdach zu schaffen, die beziehungsweise das sich durch sehr gute mechanische Eigenschaften auszeichnet.

Diese Aufgabe wird gemäß eines ersten Aspekts der Erfindung durch eine Gleitereinheit gemäß Anspruch 1 gelöst.

Ein Vorteil einer derartigen Gleitereinheit ist, dass eine Vorspannung des Gleitschuhs gegenüber dem fahrzeugfesten Teil des Fahrzeugdachs und damit ein sicheres Anliegen der Gleitflächen an dem fahrzeugfesten Teil des Fahrzeugdachs möglich ist. Die beiden Laschen erfüllen unterschiedliche Funktionen. Die erste Lasche kann ausgelegt werden, große Kräfte aufzunehmen und eine stabile Lagerung gegenüber dem dachfesten Teil, also insbesondere einer Führungsschiene zu gewährleisten. Die zweite Lasche kann aufgrund ihrer Federwirkung eine Vorspannung des Gleitschuhs in einer z-Richtung des Kraftfahrzeugs bewirken. Dabei drückt die zweite Lasche aufgrund ihrer Federwirkung den Gleitschuh gegen das fahrzeugfeste Teil, so dass ein Klappern verhindert wird. In alternativen Ausgestaltungen kann die Vorspannung nach oben oder nach unten erzeugt werden.

Ein weiterer Vorteil der erfindungsgemäßen Gleiteinheit besteht darin, dass eine Unempfindlichkeit gegenüber Fertigungstoleranzen insbesondere des Gleitschuhs erreicht werden kann. Die mittige Anordnung der Laschen bezüglich der Verschiebungsrichtung der Gleitereinheit hat den Vorteil, dass eine symmetrische Kraftausleitung von dem Trägerelement auf den Gleitschuh erfolgen kann.

In einer vorteilhaften Ausführungsform sind die Laschen bezüglich der Verschiebungsrichtung der Gleitereinheit im Wesentlichen mittig in dem Gleitschuh angeordnet. Dies hat den Vorteil, dass eine symmetrische Krafteinleitung in den Gleitschuh erfolgen kann.

In einer weiteren vorteilhaften Ausführungsform ist die zweite Lasche als Ausschnitt der ersten Lasche ausgebildet. Damit kann ein geringer Materialverbrauch für die Laschen und eine sehr hohe Stabilität der Laschen erreicht werden.

In einer weiteren vorteilhaften Ausführungsform weist der Gleitschuh im Bereich der Gleitflächen Rippen auf. Damit kann der Gleitschuh unempfindlich gegen Verkanten sein.

In einer weiteren vorteilhaften Ausführungsform sind die Rippen konisch oder ballenförmig ausgebildet. Dies hat den Vorteil, dass eine hohe Stabilität des Gleitschuhs und eine hohe Unempfindlichkeit des Gleitschuhs gegen Verkanten erreicht werden kann.

Erfindungsgemäß weist das Trägerelement sich in Verschiebungsrichtung der Gleitereinheit erstreckende Trägerarme auf, die an ihren Enden mit korrespondierenden Endabschnitten des Gleitschuhs mechanisch gekoppelt sind. Dies hat den Vorteil, dass eine Vorspannung des Gleitschuhs gegenüber dem fahrzeugfesten Teil des Fahrzeugdachs quer zur Verschiebungsrichtung der Gleitereinheit erreicht werden kann.

In einer weiteren vorteilhaften Ausführungsform ist der Gleitschuh einstückig ausgebildet. Dies hat den Vorteil, dass die Anzahl der Teile für die Gleitereinheit klein gehalten werden kann.

In einer weiteren vorteilhaften Ausführungsform ist das Trägerelement einstückig ausgebildet. Dies hat den Vorteil, dass die Anzahl der Teile für die Gleitereinheit klein gehalten werden kann.

In einer weiteren vorteilhaften Ausführungsform besteht das Trägerelement aus einem Material, das Edelstahl aufweist. Damit kann eine einfache Ausbildung des Trägerelements erreicht werden. Des Weiteren können die Krümmungsradien des Trägerelements größer ausgebildet werden.

In einer weiteren vorteilhaften Ausführungsform besteht das Trägerelement aus einem Material, das Federstahl aufweist.

Gemäß eines zweiten Aspekts der Erfindung wird die Aufgabe gelöst durch ein Fahrzeugdach mit einem fahrzeugfesten Teil, einem beweglichen Dachelement und einer Gleitereinheit gemäß des ersten Aspekts der Erfindung. Das fahrzeugfeste Teil ist als Führungsschiene ausgebildet, in der die Gleitereinheit verschiebbar gelagert ist, derart, dass das bewegliche Dachelement gegenüber der Führungsschiene verschiebbar ist.

In einer vorteilhaften Ausführungsform des zweiten Aspekts der Erfindung ist das bewegliche Dachelement ein Schiebedachdeckel, der dazu ausgebildet ist eine Dachöffnung wahlweise in einer Schließstellung des Schiebedachdeckels zu verschließen oder in weiteren Stellungen mindestens teilweise freizugeben.

Weitere vorteilhafte Ausgestaltungen der Erfindung sind in den Unteransprüchen angegeben.

Die Erfindung wird nachfolgend anhand von Ausführungsbeispielen näher erläutert. Es zeigen:
- Figur 1: eine Aufsicht auf ein Fahrzeugdach eines Kraftfahrzeugs,
- Figur 2: ein Ausschnitt II des Fahrzeugdachs der Figur 1 mit einer Gleitereinheit,
- Figur 3: ein Querschnitt entlang der Linie III-III' der Figur 2,
- Figur 4: ein Querschnitt entlang der Linie IV-IV' der Figur 2,
- Figur 5: ein Querschnitt entlang der Linie V-V' der Figur 2,
- Figur 6: eine perspektivische Ansicht der Gleitereinheit,
- Figur 7: eine weitere perspektivische Ansicht der Gleitereinheit, und
- Figur 8: eine weitere perspektivische Ansicht der Gleitereinheit.

Elemente gleicher Konstruktion oder Funktion sind figurenübergreifend mit den gleichen Bezugszeichen gekennzeichnet.

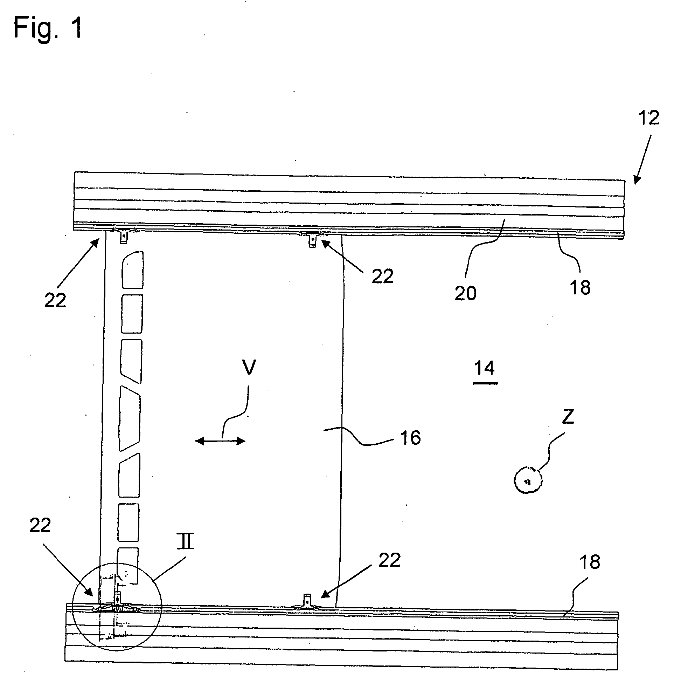

In Figur 1 ist ein Fahrzeugdach 12 eines Kraftfahrzeugs dargestellt. Das Fahrzeugdach 12 ist mit einer Dachöffnung 14 versehen, die mittels eines beweglichen Dachelements 16 wahlweise verschlossen ist oder zumindest teilweise freigegeben werden kann. Das bewegliche Dachelement 16 kann beispielsweise als innen oder als außen geführter Schiebedachdeckel ausgebildet sein. In weiteren Ausführungsformen des beweglichen Dachelements 16 kann anstelle des Schiebedachdeckels auch ein Rollo, insbesondere ein Sonnenschutzrollo, angeordnet sein.

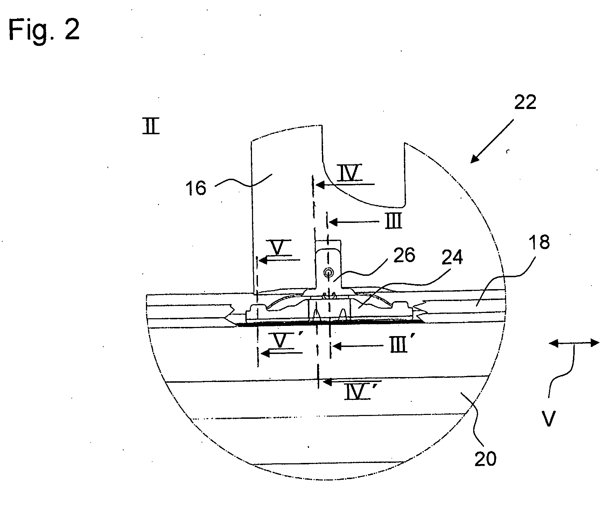

Den Figuren 1 und 2 ist ein fahrzeugfester Teil 20 des Fahrzeugdachs 12 zu entnehmen, der zwei sich in Fahrzeuglängsrichtung erstreckende Führungsschienen 18 aufweist, an denen das bewegliche Dachelement 16 seitlich geführt ist. Die Führungsschienen 18 sind beispielsweise als Aluminiumstrangpressprofile ausgebildet.

Das Fahrzeugdach 12 hat des Weiteren mehrere Gleitereinheiten 22. Ist beispielsweise das bewegliche Dachelement 16 ein Schiebedachdeckel, so kann durch Verschieben der Gleitereinheiten 22 in einer Verschiebungsrichtung V abhängig von ihrer Position bewirkt werden, dass dieser die Dachöffnung 14 wahlweise in einer Schließstellung des Schiebedachdeckels verschließt oder in weiteren Stellungen mindestens teilweise freigibt.

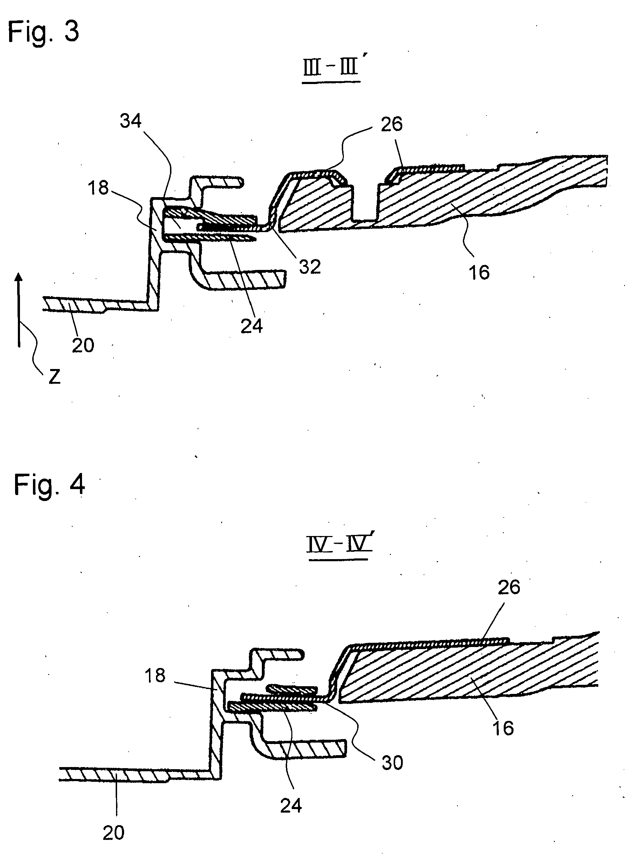

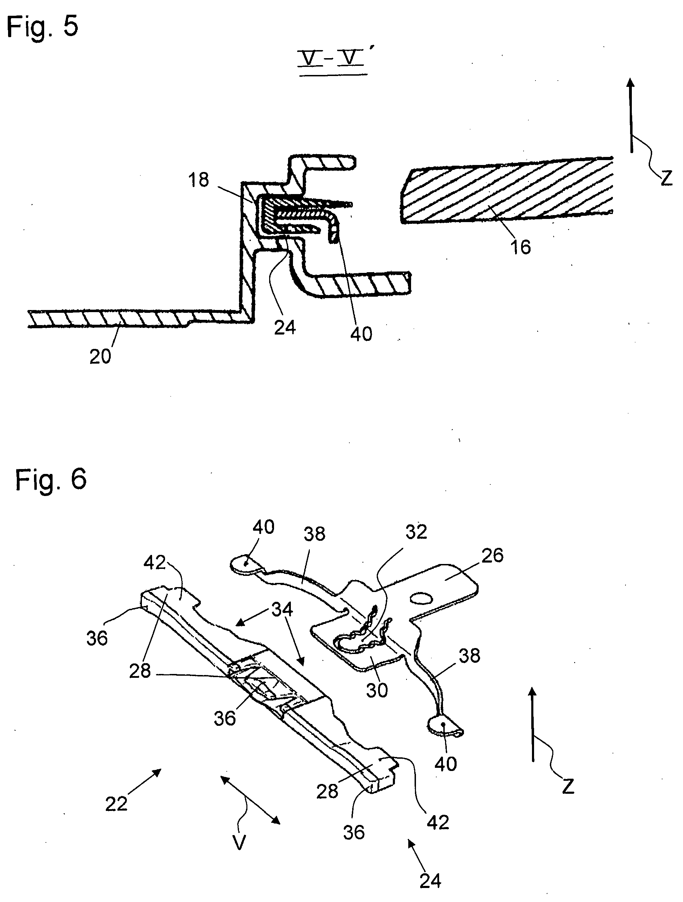

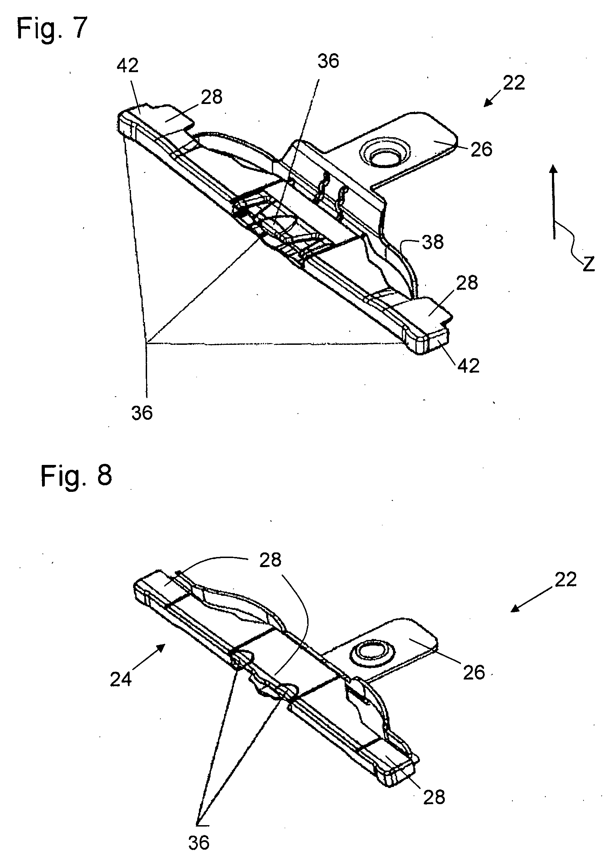

Die Gleitereinheit 22 weist einen Gleitschuh 24 und ein Trägerelement 26 auf. Der Gleitschuh 24 ist in der Führungsschiene 18 des fahrzeugfesten Teils 20 des Fahrzeugdachs 12 aufgenommen. Der Gleitschuh 24 ist vorzugsweise einstückig ausgebildet. Der Gleitschuh 24 hat mindestens zwei Gleitflächen 28, die mit der Führungsschiene 18 des fahrzeugfesten Teils 20 des Fahrzeugdachs 12 in Gleitkontakt sind (siehe Figuren 3 und 5). Die Gleitflächen 28 sind vorzugsweise auf voneinander abgewandten Seiten des Gleitschuhs 24 angeordnet (siehe Figuren 7,8). Das Trägerelement 26 ist fest mit dem beweglichen Dachelement 16 des Fahrzeugdachs 12 gekoppelt. Das Trägerelement 26 ist vorzugsweise einstückig ausgebildet.

Durch die einstückige Ausbildung des Gleitschuh 24 und des Trägerelements 26 kann die Zahl der Bauteile der Gleitereinheit 22 in vorteilhafter Weise auf Zwei beschränkt werden.

Wie besonders gut in Figur 6 erkennbar, hat das Trägerelement 26 eine erste Lasche 30 und eine zweite Lasche 32. Die Laschen 30, 32 sind im Wesentlichen quer zur Verschiebungsrichtung V der Gleitereinheit 22 angeordnet. In dem Gleitschuh 24 ist eine Ausnehmung 34 ausgebildet, in die die erste Lasche 30 und die zweite Lasche 32 eingreifen. Die erste Lasche 30 wirkt mit der zweiten Lasche 32 so zusammen, dass der Gleitschuh 24 mechanisch derart vorgespannt ist, dass die mindestens zwei Gleitflächen 28 mit dem fahrzeugfesten Teil 20 des Fahrzeugdachs in Gleitkontakt gelangen. Damit kann erreicht werden, dass der Gleitschuh 24 unter einer dauerhaften Vorspannung ist, sodass eine Bewegung des Gleitschuhs 24 in einer in den Figuren dargestellten Z-Richtung des Kraftfahrzeugs und damit ein Klappern der Gleitereinheit 22 in der Führungsschiene 18 vermieden werden kann.

Die Laschen 30, 32 sind bezüglich der Verschiebungsrichtung V der Gleitereinheit 22, das heißt also in Fahrzeuglängsrichtung, im Wesentlichen mittig in dem Trägerelement 26 angeordnet. In der hier dargestellten Ausführungsform sind die Laschen 30, 32 bezüglich der Verschiebungsrichtung V der Gleitereinheit 22 auch im Wesentlichen mittig in dem Gleitschuh 24 angeordnet. Damit kann eine hohe Symmetrie der Gleitereinheit 22 erreicht werden, und die Steifigkeit und Vorspannung des Gleiters in der in den Figuren dargestellten Z-Richtung des Kraftfahrzeugs als auch die Vorspannung quer zur Verschiebungsrichtung V der Gleitereinheit 22 können unabhängig voneinander eingestellt werden. Insbesondere kann die erste Lasche 30 die Position der Gleitereinheit 22 in der in den Figuren dargestellten Z-Richtung des Kraftfahrzeugs bestimmen sowie die Kräfte in der Z-Richtung des Kraftfahrzeugs aufnehmen.

In der hier gezeigten Ausführungsform ist die zweite Lasche 32 als Ausschnitt der ersten Lasche 30 ausgebildet (siehe insbesondere Figur 6). Damit kann ein geringer Materialverbrauch für die Laschen 30, 32 erreicht werden, und die Laschen 30, 32 können besonders stabil ausgebildet sein.

Auf den Gleitflächen 28 des Gleitschuhs 24 sind Rippen 36 aufgebracht. Die Rippen 36 sind insbesondere konisch oder ballenförmig ausgebildet. Durch die konische oder ballenförmige Ausbildung der Rippen 36 kann die Gleitereinheit 22 besonders unempfindlich gegen Verkanten sein und damit sehr geringe Verschiebekraftschwankungen haben.

Das Trägerelement 26 hat zwei Trägerarme 38, die sich im Wesentlichen in der Verschiebungsrichtung V der Gleitereinheit 22 erstrecken. Die Trägerarme 38 haben in Verschiebungsrichtung V der Gleitereinheit 22 maximal voneinander beabstandete Enden 40, die in der hier dargestellten Ausführungsform im Wesentlichen halbkreisförmig ausgebildet sind. Die halbkreisförmigen Enden 40 der Trägerarme 38 können so sehr gut mit korrespondierenden Endabschnitten 42 des Gleitschuhs 24 mechanisch gekoppelt sein. Durch die mechanische Kopplung der Enden 40 der Trägerarme 38 sowie der Laschen 30, 32 mit dem Gleitschuh 24 kann eine sehr stabile Kopplung zwischen dem Gleitschuh 24 und dem Trägerelement 26 erreicht werden. Die Steifigkeit in der in den Figuren dargestellten Z-Richtung des Kraftfahrzeugs, die Vorspannung des Gleitschuhs 24 in Z-Richtung sowie die Vorspannung der Gleitereinheit 22 in Fahrzeuglängsrichtung können so sehr gut unabhängig voneinander eingestellt werden. Des Weiteren ist die Ausführung der Gleitereinheit 22 unempfindlich gegenüber auftretenden Fertigungstoleranzen. Die Trägerarme 38 nehmen lediglich die Kräfte quer zu der Verschiebungsrichtung V der Gleitereinheit 22 auf, und können somit eine geringe Bauhöhe aufweisen.

Das Trägerelement 26 besteht vorzugsweise ganz oder teilweise aus Edelstahl. Damit können die äußeren Abkantungen und die damit notwendigen Biegeradien für die Trägerarme 38 entfallen, da die Trägerarme 38 nur Kräfte quer zu der Verschiebungsrichtung V der Gleitereinheit 22 aufnehmen müssen.

In einer weiteren bevorzugten Ausführungsform ist das Trägerelement 26 ganz oder teilweise aus einem Federstahl gebildet. Damit kann eine einfache Fertigung der Trägerelemente 26 mittels thermischer Nachbehandlung und darauffolgender Oberflächenbeschichtung erreicht werden, und durch die geometrische Gestaltung der Trägerarme, beispielsweise der halbkreisförmigen Ausbildung der Enden 40 der Trägerarme 38, kann ein Verhaken der Trägerarme 38 während der Fertigung vermieden werden.

## Patentansprüche

1. Gleitereinheit (22) zur Lagerung eines beweglichen Dachelements (16) eines Fahrzeugdachs (12), mit
- einem Gleitschuh (24), der zur verschiebbaren Aufnahme in einem fahrzeugfesten Teil (20) des Fahrzeugdachs (12) ausgebildet ist und der mindestens zwei Gleitflächen (28) aufweist, und
- einem Trägerelement (26), das zur festen mechanischen Kopplung mit dem beweglichen Dachelement (16) des Fahrzeugdachs (12) und zur mechanischen Kopplung mit dem Gleitschuh (24) ausgebildet ist,
wobei das Trägerelement (26) eine erste Lasche (30) und eine zweite Lasche (32) aufweist, die bezüglich einer Verschiebungsrichtung (V) der Gleitereinheit (22) im Wesentlichen mittig in dem Trägerelement (26) angeordnet sind, wobei die erste Lasche (30) mit einer Ausnehmung (34) des Gleitschuhs (24) in Eingriff ist zur Festlegung der Position des Gleitschuhs (24) gegenüber dem fahrzeugfesten Teil (20) des Fahrzeugdachs (12) und die zweite Lasche (32) mit der Ausnehmung (34) des Gleitschuhs (24) in Eingriff und derart ausgebildet ist, dass der Gleitschuh (24) im montierten Zustand der Gleitereinheit (22) gegenüber dem fahrzeugfesten Teil (20) vorgespannt ist, **dadurch gekennzeichnet, dass** das Trägerelement (26) sich in der Verschiebungsrichtung (V) der Gleitereinheit (22) erstreckende Trägerarme (38) aufweist, die an ihren Enden (40) mit korrespondierenden Endabschnitten (42) des Gleitschuhs (24) mechanisch gekoppelt sind.

2. Gleitereinheit (22) nach Anspruch 1,
**dadurch gekennzeichnet, dass** die Laschen (30,32) bezüglich der Verschiebungsrichtung (V) der Gleitereinheit (22) im Wesentlichen mittig in dem Gleitschuh (24) angeordnet sind.

3. Gleitereinheit (22) nach Anspruch 1 oder 2,
**dadurch gekennzeichnet, dass** die zweite Lasche (32) als Ausschnitt der ersten Lasche (30) ausgebildet ist.

4. Gleitereinheit (22) nach einem der vorhergehenden Ansprüche, **dadurch gekennzeichnet, dass** der Gleitschuh (24) im Bereich der Gleitflächen (28) Rippen (36) aufweist.

5. Gleitereinheit (22) nach Anspruch 4, **dadurch gekennzeichnet, dass** die Rippen (36) konisch oder ballenförmig ausgebildet sind.

6. Gleitereinheit (22) nach einem der vorhergehenden Ansprüche, **dadurch gekennzeichnet, dass** der Gleitschuh (24) einstückig ausgebildet ist.

7. Gleitereinheit (22) nach einem der vorhergehenden Ansprüche, **dadurch gekennzeichnet, dass** das Trägerelement (26) einstückig ausgebildet ist.

8. Gleitereinheit (22) nach einem der vorhergehenden Ansprüche, **dadurch gekennzeichnet, dass** das Trägerelement (26) aus einem Material besteht, das Edelstahl aufweist.

9. Gleitereinheit (22) nach einem der Ansprüche 1 bis 7, **dadurch gekennzeichnet, dass** das Trägerelement (26) aus einem Material besteht, das Federstahl aufweist.

10. Fahrzeugdach (12) mit einem fahrzeugfesten Teil, einem beweglichen Dachelement (16) und einer Gleitereinheit (22) nach einem der vorhergehenden Ansprüche, wobei das fahrzeugfeste Teil (20) als Führungsschiene (18) ausgebildet ist, in der die Gleitereinheit (22) verschiebbar gelagert ist, derart, dass das bewegliche Dachelement (16) gegenüber der Führungsschiene (18) verschiebbar ist.

11. Fahrzeugdach (12) nach Anspruch 10, **dadurch gekennzeichnet, dass** das bewegliche Dachelement (16) ein Schiebedachdeckel ist, der dazu ausgebildet ist eine Dachöffnung (14) wahlweise in einer Schließstellung des Schiebedachdeckels zu verschließen oder in weiteren Stellungen mindestens teilweise freizugeben.

## Claims

1. Slider unit (22) for mounting a movable roof member (16) of a vehicle roof (12) comprising
- a sliding block (24), which is designed for displaceable mounting in a vehicle-fixed part (20) of the vehicle roof (12) and which has at least two sliding faces (28), and
- a carrier member (26), which is designed for fixed mechanical coupling to the movable roof member (16) of the vehicle roof (12) and for mechanical coupling to the sliding block (24),
wherein the carrier member (26) has a first tab (30) and a second tab (32) which are arranged substantially centrally in the carrier member (26) relative to a displacement direction (V) of the slider unit (22), wherein the first tab (30) is in engagement with a recess (34) in the sliding block (24) to fix the position of the sliding block (24) in relation to the vehicle-fixed part (20) of the vehicle roof (12), and the second tab (32) is in engagement with the recess (34) of the sliding block (24) and is designed in such a manner that the sliding block (24) is pretensioned in relation to the vehicle-fixed part (20) in the mounted state of the slider unit (22), **characterized in that** the carrier member (26) has carrier arms (38) extending in the displacement direction (V) of the slider unit (22), which arms are mechanically coupled at their ends (40) to corresponding end sections (42) of the sliding block (24).

2. Slider unit (22) according to Claim 1,
**characterized in that** the tabs (30, 32) are arranged substantially centrally in the sliding block (24) relative to the displacement direction (V) of the slider unit (22).

3. Slider unit (22) according to Claim 1 or 2, **characterized in that** the second tab (32) is configured as a cutout of the first tab (30).

4. Slider unit (22) according to one of the preceding claims, **characterized in that** the sliding block (24) exhibits fins (36) in the region of the sliding faces (28).

5. Slider unit (22) according to Claim 4, **characterized in that** the fins (36) are conical or spherical in design.

6. Slider unit (22) according to one of the preceding claims, **characterized in that** the sliding block (24) is formed in one piece.

7. Slider unit (22) according to one of the preceding claims, **characterized in that** the carrier member (26) is formed in one piece.

8. Slider unit (22) according to one of the preceding claims, **characterized in that** the carrier member (26) is made of a material comprising stainless steel.

9. Slider unit (22) according to one of Claims 1 to 7, **characterized in that** the carrier member (26) is made of a material comprising spring steel.

10. Vehicle roof (12) comprising a vehicle-fixed part, a movable roof member (16) and a slider unit (22) according to one of the preceding claims, wherein the vehicle-fixed part (20) is configured as a guide rail (18), in which the slider unit (22) is displaceably mounted such that the movable roof member (16) is displaceable in relation to the guide rail (18).

11. Vehicle roof (12) according to Claim 10, **characterized in that** the movable roof member (16) is a sliding headliner which is designed either to close a roof opening (14) in a closed position of the sliding headliner or to open it at least partially in further positions.

## Revendications

1. Unité de coulisseau (22) pour le support d'un élément de toit mobile (16) d'un toit de véhicule (12), comprenant
- un patin (24) qui est réalisé pour être reçu de manière déplaçable dans une partie fixée au véhicule (20) du toit de véhicule (12) et qui présente au moins deux surfaces de glissement (28), et
- un élément de support (26) qui est réalisé en vue de l'accouplement mécanique fixe à l'élément de toit mobile (16) du toit de véhicule (12) et en vue de l'accouplement mécanique au patin (24),
l'élément de support (26) présentant une première patte (30) et une deuxième patte (32) qui sont disposées par rapport à une direction de déplacement (V) de l'unité de coulisseau (22) essentiellement centralement dans l'élément de support (26), la première patte (30) étant en prise avec un évidement (34) du patin (24) pour la fixation de la position du patin (24) par rapport à la partie fixée au véhicule (20) du toit de véhicule (12) et la deuxième patte (32) étant en prise avec l'évidement (34) du patin (24) et étant réalisée de telle sorte que le patin (24), dans l'état monté de l'unité de coulisseau (22), soit précontraint par rapport à la partie fixée au véhicule (20), **caractérisée en ce que** l'élément de support (26) présente des bras de support (38) s'étendant dans la direction de déplacement (V) de l'unité de coulisseau (22), lesquels sont accouplés mécaniquement au niveau de leurs extrémités (40) à des portions d'extrémité correspondantes (42) du patin (24).

2. Unité de coulisseau (22) selon la revendication 1, **caractérisée en ce que** les pattes (30, 32) sont disposées, par rapport à la direction de déplacement (V) de l'unité de coulisseau (22), essentiellement centralement dans le patin (24).

3. Unité de coulisseau (22) selon la revendication 1 ou 2, **caractérisée en ce que** la deuxième patte (32) est réalisée sous forme de partie découpée de la première patte (30).

4. Unité de coulisseau (22) selon l'une quelconque des revendications précédentes, **caractérisée en ce que** le patin (24) présente des nervures (36) dans la région des surfaces de glissement (28).

5. Unité de coulisseau (22) selon la revendication 4, **caractérisée en ce que** les nervures (36) sont réalisées sous forme conique ou bombée.

6. Unité de coulisseau (22) selon l'une quelconque des revendications précédentes, **caractérisée en ce que** le patin (24) est réalisé d'une seule pièce.

7. Unité de coulisseau (22) selon l'une quelconque des revendications précédentes, **caractérisée en ce que** l'élément de support (26) est réalisé d'une seule pièce.

8. Unité de coulisseau (22) selon l'une quelconque des revendications précédentes, **caractérisée en ce que** l'élément de support (26) se compose d'un matériau qui présente de l'acier inoxydable.

9. Unité de coulisseau (22) selon l'une quelconque des revendications 1 à 7, **caractérisée en ce que** l'élément de support (26) se compose d'un matériau qui présente de l'acier à ressort.

10. Toit de véhicule (12) comprenant une partie fixée au véhicule, un élément de toit mobile (16) et une unité de coulisseau (22) selon l'une quelconque des revendications précédentes, la partie fixée au véhicule (20) étant réalisée sous forme de rail de guidage (18) dans lequel l'unité de coulisseau (22) est supportée de manière déplaçable de telle sorte que l'élément de toit mobile (16) puisse être déplacé par rapport au rail de guidage (18).

11. Toit de véhicule (12) selon la revendication 10, **caractérisé en ce que** l'élément de toit mobile (16) est un couvercle de toit ouvrant qui est réalisé pour fermer une ouverture de toit (14) de manière sélective dans une position de fermeture du couvercle de toit ouvrant ou pour l'ouvrir au moins partiellement dans d'autres positions.
